# EUROPEAN PATENT SPECIFICATION

(11) **EP 1 665 927 B1**
(45) Date of publication and mention of the grant of the patent: **19.08.2009**
(21) Application number: 06100699.5
(22) Date of filing: 23.01.2006
(51) Int. Cl.: A01K 13/00

(54) **Equipment for brushing cattle**
Rotierende Viehbürste
Brosse à bétail rotative

(30) Priority: 11.03.2005 IT BS20050032
(43) Date of publication of application: 07.06.2006
(73) Proprietor: Agricow S.r.l., 25013 Carpenedolo BS (IT)
(72) Inventor: Musicco, Alberto, 25013 Carpenedolo BS (IT)
(74) Representative: Crippa, Paolo Ernesto

(56) References cited:
- DE-A1- 10 002 688
- DE-C1- 19 734 289
- US-A- 1 704 724
- US-A1- 2005 161 003

## Description

The object of the present invention is an equipment for brushing cattle.

It is known that in cattle farms, automated brushes can be used in contact with which the animals are brought to be subject to a massaging and mantle cleaning action.

The brushes extend from support means and are moved in rotation about an axis thereof by a motor apparatus when an animal comes into contact therewith.

The use of single brushes is currently known, arranged along an axis inclined relative to the ground, so that the animal that contacts it undergoes a brushing of a portion of the side and the back.

Equipment is also known which comprises a brush arranged vertically and a brush that extends horizontally, so that the animal may be brushed more at length along the whole side and back.

It is clear that with a single brush, the cattle brushing action is quite limited, whereas a better brushing effect is obtained with the double brush, but with a more complex and expensive equipment, since also the brush support, handling and control means must be double.

In both cases, moreover, the brushes exhibit a predetermined orientation that forces the animals to follow a force path of approach and positioning close to the brushes. Special systems for directing the cattle towards the brushing point must also be provided.

Moreover, WO-A-03/084316 discloses a brushing device for brushing cattle as in the preamble of claim 1 having an oblong brush that can be made to rotate by actuating means and that extends vertically from a support structure. The brush is connected to said structure through at least one flexible element that, if subject to a force acting thereon, allows the brush to oscillate in any direction up to a substantially horizontal orientation.

The use of such device, however, has shown the disadvantage that as soon as the brush reaches such inclination as to start the actuating means, instead of rotating on itself remaining resting on the zone that the animal wants to have brushed, it tends to roll along the animal's body until it loses contact therewith. The desired effect, therefore, is not obtained in a satisfactory manner, especially if the brush is relatively small and light.

The object of the present invention is to propose an equipment for brushing cattle, which allows obviating the limitations of the equipment mentioned above.

Such object is achieved with an equipment for brushing cattle as set out in claim 1.

Further details and advantages of the equipment according to the present invention will appear more clearly from the description of a preferred embodiment, made by way of an indicative non-limiting example with reference to the annexed drawings, wherein:

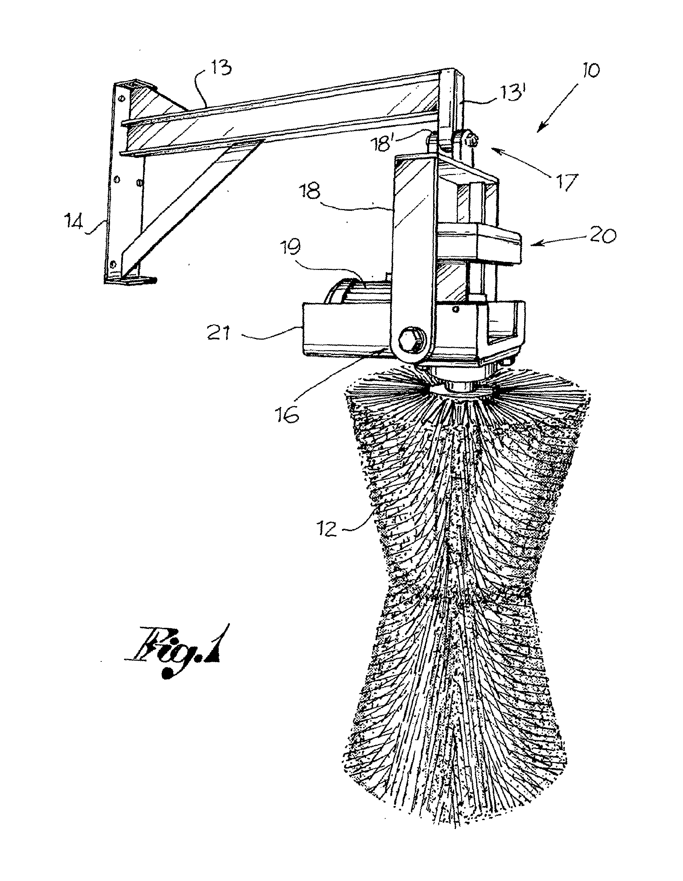

**-** - figure 1 shows a perspective view of the equipment according to the present invention;

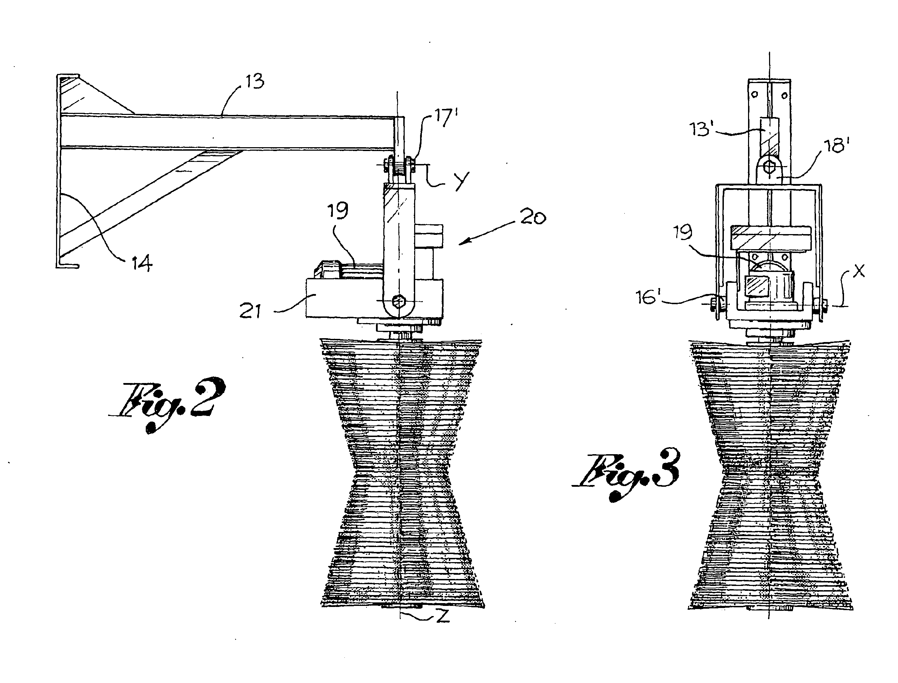

- - figure 2 shows a side view of the equipment;

- - figure 3 shows a front view of the equipment;

**-** figures 4a and 4b show the equipment in respective use configurations.

In said drawings, reference numeral 10 globally denotes an equipment for brushing cattle 11. Equipment 10 comprises a brush 12 and a support arm 13 to which said brush is connected.

In accordance with a general embodiment, the connection between brush 12 and the support arm 13 is obtained by articulation means suitable for allowing an oscillation of brush 12 in two planes orthogonal to each other.

Brush 12 normally is in an inactive or home position and is made to oscillate by the contact with an animal 11. In home position, brush 12 hangs from the support arm 13 under the action of gravity.

The support arm 13 extends projecting from a plate 14, for example attached to a wall 15 or another stationary support.

In accordance with a preferred embodiment, said articulation means comprise first hinge means 16 to which brush 12 is attached and second hinge means 17 to which said first hinge means are in turn attached.

Said first and second hinge means 16, 17 exhibit respective rotation pins 16', 17' orthogonal to one another so as to define a first axis of rotation X and a second axis of rotation Y orthogonal to the first one.

According to an embodiment, said first hinge means 16 are carried by a bracket 18 shaped as upturned U. The first pin 16' extends between the ends of said bracket 18. The second hinge means 17 are carried by the support arm 13.

More in detail, a pair of tongues 18' extends from the top of bracket 18 between which the second rotation pin 17' extends. The support arm 13 exhibits a distal end 13' wherein there is obtained a hole for seating the second pin 17'.

Brush 12 exhibits an axial-symmetric shape, and may be shaped as a rotation solid with main axis Z. For example, the brush exhibits a cylindrical shape. More preferably, brush 12 is shaped as double truncated cone or hyperboloid.

In accordance with a preferred embodiment, the brush exhibits a length extension of about 1 m and an outer diameter of about 50 cm. The bristles are made, for example, of polypropylene and exhibit a diameter comprised between 1 mm and 1.5 mm.

Brush 12 is subject to rotate about its main axis Z. To this end, equipment 10 is provided with a motor apparatus 19 for a motor-driven rotation of the brush.

In accordance with an especially advantageous embodiment, the equipment further comprises sensing means 20 suitable for detecting a movement of brush 12 relative to a home position and transmitting an actuation signal to the motor apparatus 19 that remains active as long as the brush is not in said home position.

If, as in the example of embodiment described, the home position of the brush is the vertical one determined by its weight force, the sensing means are suitable for detecting an inclination of the brush relative to the vertical.

To this end, the motor apparatus 19 and/or the sensing means 20 are placed in a seat 21 integral to and oscillating with, the rotation pin 16' of the first hinge means.

In an embodiment that allows optimising the overall dimensions of the equipment, said seat 21 is placed into the support bracket 18 of the first hinge means. In any case, bracket 18 extends in such a way as to allow an oscillation of the brush by at least 180°.

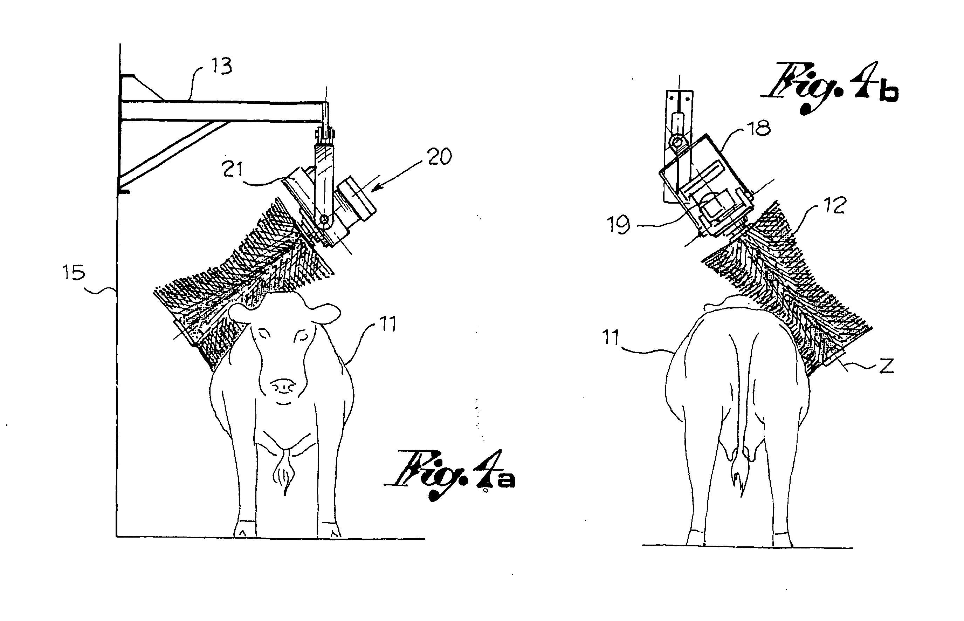

Equipment 10 according to the invention therefore allows brushing the animal in any position it is, or from any direction it approaches the brush. Figures 4a and 4b show cattle 11 in two positions substantially orthogonal to each other. No systems for directing the animals to a predetermined position are therefore required, but they are free to move around the brush. It has been proven that in this way, the cattle approaches the brushes more frequently.

The peculiar feature that the brush is capable of oscillating only in two planes orthogonal to each other was carefully devised and is especially advantageous since, even though it ensures wide freedom of movement to the brush, it prevents or in any case hinders an undesired rolling thereof along the animal's mantle when it is placed in rotation about its axis.

In other words, if the brush had a greater freedom of oscillation, for example if it could oscillate in any direction, being connected to the support arm 13 by a spherical joint, a cardan joint, elastic or flexible means or other equivalent systems, as soon as it starts to rotate about its axis, due to the friction with the animal's mantle, it would tend to roll away along the cattle's body and then beyond it. The massaging action of the brush, therefore, could not be carried out properly, as it would be immediately interrupted as soon as the brush starts to rotate, and since the brush itself would not find the support of the cattle's body anymore and would oscillate uncontrollably, it would even be a danger for the animals in the vicinity of to the equipment.

On the other hand, it has been proven that the structure with two orthogonal hinges of the articulation means forces the brush to remain into the position it was pushed by the animal. This effect is even stronger using a brush of a certain weight, such as 10-15 Kg.

Moreover, the animal can be brushed with a single brush on a very wide surface, going from the side to the back, according to the needs of the animal itself. In fact, with the equipment proposed herein, the latter can choose which part of its body it wants to have brushed, according to the way it positions relative to the brush. The brush adapts to the animal's position and size rather than the other way round, as it happens with current equipment.

The equipment proposed herein, moreover, exhibits the further advantage of allowing brushing cattle of very different sizes, without the need of changing the position of the support means of the brush. These support means need no special mechanisms intended for moving the brush according to the size of the animals, but instead, they are especially simple and inexpensive to make and maintain. The reduced or even null maintenance the equipment of the invention must be subject to, thanks to its intrinsic construction simplicity, is an important advantage considering the fact that this equipment is used in difficult sites like cattle farms.

It is evident that a man skilled in the art may make several changes and adjustments to the equipment according to the present invention in order to meet specific and incidental needs, all falling within the scope of protection of the invention as defined in the following claims.

For example, different articulation means may be used, such as spherical joints, gears or similar articulated connecting systems.

## Claims

1. An equipment for brushing cattle (10) comprising a brush (12), a support arm (13) to which said brush is connected, wherein the brush exhibits an axial-symmetric shape and is subject to rotate about its axis, and a motor apparatus (19) for a motor driven rotation of the brush, **characterised in that** said connection between the brush and the support arm is obtained by articulation means (16, 17) suitable for allowing an oscillation of the brush only in two planes orthogonal to each other.

2. An equipment according to claim 1, wherein in home position, the brush (12) hangs from the support arm (13) under the action of gravity.

3. An equipment according to claim 2, wherein said articulation means comprise first hinge means (16) to which the brush is attached and second hinge means (17) to which said first hinge means are in turn attached, said first and second hinge means exhibiting rotation pins (16', 17') orthogonal to each other.

4. An equipment according to claim 3, wherein said first hinge means (16) are carried by a bracket (18) shaped as upturned U.

5. An equipment according to claim 3 or 4, wherein said second hinge means (17) are carried by the support arm (13).

6. An equipment according to anyone of the previous claims, comprising sensing means (20) suitable for detecting a movement of brush relative to a home position and transmitting an actuation signal to the motor apparatus that remains active as long as the brush is not in said home position.

7. An equipment according to claim 6, wherein the motor apparatus and/or the sensing means are placed in a seat (21) integral to and oscillating with, the rotation pin (16') of the first hinge means (16).

8. An equipment according to claim 7, wherein said seat (21) is placed inside the support bracket (18) of the first hinge means, said bracket extending so as to allow an oscillation of the brush by at least 180°.

9. An equipment according to any one of the previous claims, wherein the support arm extends projecting from a plate (14) attached to the wall.

10. An equipment according to any one of the previous claims, wherein the brush exhibits the shape of a rotation solid.

11. An equipment according to any one of the previous claims, wherein the brush has a cylindrical shape.

12. An equipment according to any one of the previous claims, wherein the brush exhibits double truncated cone shape.

13. An equipment according to any one of the previous claims, wherein the brush has a hyperboloid shape.

14. An equipment according to any one of the previous claims, wherein the brush consists of bristles having a diameter comprised between 1 and 1.5 mm.

## Patentansprüche

1. Einrichtung für Viehbürste (10), die umfasst: eine Bürste (12), einen Halte- bzw. Trägerarm (13), mit dem die Bürste verbunden ist, wobei die Bürste eine axialsymmetrische Form besitzt und einer Drehung um ihre Achse unterliegt, und eine Motorvorrichtung (19) für eine motorbetriebene Drehung der Bürste, **dadurch gekennzeichnet, dass** die Verbindung zwischen der Bürste und dem Trägerarm durch Gelenkmittel (16, 17) erhalten wird, die geeignet sind, eine Schwingung der Bürste nur in zwei aufeinander senkrechten Ebenen zuzulassen.

2. Einrichtung nach Anspruch 1, wobei die Bürste (12) in der Grundstellung unter der Wirkung der Schwerkraft von dem Trägerarm (13) hängt.

3. Einrichtung nach Anspruch 2, wobei die die Gelenkmittel erste Drehachsen- bzw. Scharniermittel (16), an denen die Bürste befestigt ist, und zweite Scharniermittel (17), an denen die ersten Scharniermittel ihrerseits befestigt sind, umfasst, wobei die ersten und zweiten Scharniermittel Drehstifte (16', 17') besitzen, welche senkrecht aufeinander sind.

4. Einrichtung nach Anspruch 3, wobei die ersten Scharniermittel (16) von einer Klammer (18) gehalten werden, die als ein nach oben gedrehtes U geformt ist.

5. Einrichtung nach Anspruch 3 oder 4, wobei die zweiten Scharniermittel (17) von dem Trägerarm (13) gehalten werden.

6. Einrichtung nach einem der vorangehenden Ansprüche, die Abtastmittel (20) umfassen, die geeignet sind, eine Bürstenbewegung relativ zu einer Grundstellung zu erfassen und ein Betätigungssignal an die Motorvorrichtung zu senden, die aktiv bleibt, solange die Bürste nicht in der Grundstellung ist.

7. Einrichtung nach Anspruch 6, wobei die Motorvorrichtung und/oder die Abtastmittel in einem Auflager (21) angeordnet sind, das integral mit dem Drehstift (16') der ersten Scharniermittel (16) ist und damit schwingt.

8. Einrichtung nach Anspruch 7, wobei das Auflager (21) im Inneren der Klammer (18) der ersten Scharniermittel angeordnet ist, wobei sich die Klammer derart erstreckt, dass sie eine Schwingung der Bürste um wenigstens 180° zulässt.

9. Einrichtung nach einem der vorangehenden Ansprüche, wobei sich der Trägerarm von einer an der Wand befestigten Platte (14) vorstehend erstreckt.

10. Einrichtung nach einem der vorangehenden Ansprüche, wobei die Bürste die Form eines Drehkörpers besitzt.

11. Einrichtung nach einem der vorangehenden Ansprüche, wobei die Bürste eine zylindrische Form hat.

12. Einrichtung nach einem der vorangehenden Ansprüche, wobei die Bürste eine Doppelkegelstumpfform besitzt.

13. Einrichtung nach einem der vorangehenden Ansprüche, wobei die Bürste eine Hyperboloidform hat.

14. Einrichtung nach einem der vorangehenden Ansprüche, wobei die Bürste aus Borsten mit einem zwischen 1 und 1,5 mm umfassenden Durchmesser besteht.

## Revendications

1. Equipement de brossage du bétail (10) comprenant une brosse (12), un bras de support (13) auquel ladite brosse est reliée, dans lequel la brosse montre une forme axiale symétrique et est soumise à une rotation autour de son axe, et un appareil moteur (19) pour une rotation motorisée de la brosse, **caractérisé en ce que** ladite liaison entre la brosse et le bras de support est obtenue par des moyens d'articulation (16, 17) adaptés pour permettre une oscillation de la brosse seulement dans deux plans orthogonaux l'un par rapport à l'autre.

2. Equipement selon la revendication 1, dans lequel, en position de repos, la brosse (12) pend du bras de support (13) sous l'action de la gravité.

3. Equipement selon la revendication 2, dans lequel lesdits moyens d'articulation comprennent des premiers moyens de charnière (16) auxquels la brosse est fixée, et des seconds moyens de charnière (17) auxquels lesdits premiers moyens de charnière sont à leur tour fixés, lesdits premiers et seconds moyens de charnière présentant des axes de rotation (16', 17') orthogonaux l'un par rapport à l'autre.

4. Equipement selon la revendication 3, dans lequel lesdits premiers moyens d'articulation (16) sont portés par un étrier (18) en forme de U retourné.

5. Equipement selon la revendication 3 ou 4, dans lequel lesdits seconds moyens d'articulation (17) sont portés par le bras de support (13).

6. Equipement selon une quelconque des revendications précédentes, comprenant des moyens de détection (20) adaptés pour détecter un mouvement de la brosse par rapport à une position de repos et transmettre un signal d'actionnement à l'appareil moteur qui reste actif tant que la brosse n'est pas dans ladite position de repos.

7. Equipement selon la revendication 6, dans lequel l'appareil moteur et/ou les moyens de détection sont placés dans un logement (21) solidaire de et oscillant avec l'axe de rotation (16') des premiers moyens de charnière (16).

8. Equipement selon la revendication 7, dans lequel ledit logement (21) est placé à l'intérieur de l'étrier de support (18) des premiers moyens de charnière, ledit étrier s'étendant de façon à permettre une oscillation de la brosse d'au moins 180°.

9. Equipement selon une quelconque des revendications précédentes, dans lequel le bras de support s'étend en faisant saillie d'une plaque (14) fixée au mur.

10. Equipement selon une quelconque des revendications précédentes, dans lequel la brosse présente la forme d'un solide de rotation.

11. Equipement selon une quelconque des revendications précédentes, dans lequel la brosse a une forme cylindrique.

12. Equipement selon une quelconque des revendications précédentes, dans lequel la brosse présente une forme à double tronc de cône.

13. Equipement selon une quelconque des revendications précédentes, dans lequel la brosse a une forme d'hyperbole.

14. Equipement selon une quelconque des revendications précédentes, dans lequel la brosse se compose de soies ayant un diamètre compris entre 1 et 1,5 mm.-
